# EUROPÄISCHE PATENTANMELDUNG

(11) **EP 1 137 143 A2**
(43) Veröffentlichungstag der Anmeldung: **26.09.2001**
(21) Anmeldenummer: 01105668.6
(22) Anmeldetag: 07.03.2001
(51) Int. Cl.: H02G 11/02, B65H 75/36

(54) **Vorrichtung zum Aufnehmen und Abziehen eines biegeelastischen strangförmigen Materials**

(30) Priorität: 11.03.2000 DE 10011938
(71) Anmelder: Katimex-Cielker GmbH, 54584 Jünkerath (DE)
(72) Erfinder: Hasberg, Josef, 51491 Overath (DE)
(74) Vertreter: Wanischeck-Bergmann, Axel, Dipl.-Ing.

(57) **Zusammenfassung**

Die Erfindung betrifft eine Vorrichtung zum Aufnehmen und Abziehen eines biegeelastischen strangförmigen Materials (18), wobei die Eigenspannung des Materials (18) das Bestreben hat, das Material (18) gestreckt zu halten, mit einer Speichereinrichtung (19), an deren Innenmantel sich das biegeelastische Material (18) anlegt, einem Auslaß für das biegeelastische Material (18) und einem Handgriff (1), der derart mit der Speichereinrichtung (19) verbunden ist, daß die Speichereinrichtung (19) relativ zum Handgriff (1) drehbar ist. Um die Handhabbarkeit einer derartigen Vorrichtung zu vereinfachen und die Anwendungsmöglichkeiten der Vorrichtung zu verbessern und vervielfältigen, ist vorgesehen, daß der Handgriff (1) eine Führung (11) für das Strangmaterial (18) aufweist und daß der Handgriff (1) eine Aufnahme (9) für ein modulartiges Element (10) hat, welches mit dem auslaufenden oder einlaufenden Strangmaterial in Kontakt bringbar ist.

## Beschreibung

Die Erfindung betrifft eine Vorrichtung zum Aufnehmen und Abziehen eines biegeelastischen strangförmigen Materials zum Beispiel zum Einziehen von Kabeln oder sonstigen elektrischen oder anderen Energie- und / oder Datenleitungen in Kabelschutzrohre oder Leerrohre, oder von Einrichtungen zum Reinigen und/oder Prüfen von Rohrleitungen und / oder Kanälen, wobei die Eigenspannung des Materials das Bestreben hat, das Material gestreckt zu halten, mit einer Speichereinrichtung, an deren Innenmantel sich das biegeelastische Material anlegt, einem Auslaß für das biegeelastische Material und einem Handgriff, der derart mit der Speichereinrichtung verbunden ist, daß die Speichereinrichtung relativ zum Handgriff drehbar ist.

Derartige Vorrichtungen sind aus dem Stand der Technik bekannt. Beispielsweise sind auf dem Markt Vorrichtungen zur Kontrolle und Reinigen von Abgasrohren mit kleinen Querschnitten bekannt, die aus einer als Drahtkorb ausgebildeten Speichereinrichtung zur Aufnahme eines extrem schubstabilen und dennoch hochflexiblen Glasfiberstabes vorgesehen ist. Der Glasfiberstab weist hierbei die Eigenschaft auf, in der Speichereinrichtung speicherbar zu sein und sich an den Speichen des Drahtkorbs anzulegen. Die Speichereinrichtung ist mit einem Handgriff drehbar verbunden, wobei der Handgriff an der Drehachse der Speichereinrichtung befestigt ist. Der Handgriff ist im wesentlichen U-förmig ausgebildet, wobei der Handgriff mit einem Schenkel an der Speichereinrichtung angeordnet und der zweite Schenkel zur Handhabung der Vorrichtung ausgebildet ist. Der Glasfiberstab wird durch eine Öse am Handgriff geführt. Der Handgriff ist im übrigen auch dazu geeignet, in einen Gürtel einer die Vorrichtung handhabenden Person eingesteckt zu werden, um die Arbeit mit der Vorrichtung dadurch zu vereinfachen, daß beispielsweise der Glasfiberstab mit beiden Händen gehandhabt werden kann.

Ausgehend von diesem Stand der Technik liegt der Erfindung die **Aufgabe** zugrunde, eine gattungsgemäße Vorrichtung dahingehend weiterzu entwickeln, daß ihre Handhabbarkeit vereinfacht und die Anwendungsmöglichkeiten der Vorrichtung verbessert und vervielfältigt werden.

Die **Lösung** dieser Aufgabenstellung sieht vor, daß der Handgriff eine Führung für das Strangmaterial aufweist und daß der Handgriff eine Aufnahme für ein modulartiges Element hat, welches mit dem auslaufenden oder einlaufenden Strangmaterial in Kontakt bringbar ist.

Eine nach dieser Lehre ausgebildete Vorrichtung hat insbesondere den Vorteil, daß das Strangmaterial durch die Führung definiert aus der Speichereinrichtung ausläuft bzw. in die Speichereinrichtung einschieb- bzw. einziehbar ist. Die Anordnung eines modulartigen Elementes, welches mit dem auslaufenden oder einlaufenden Strangmaterial in Kontakt bringbar ist, hat den Vorteil, daß über das modulartige Element die Arbeitsweise bzw. die Einsatzmöglichkeiten der Vorrichtung in Abhängigkeit der bestmöglichen Handhabung durch eine Person mit unterschiedlichen modulartigen Elementen variabel ist. Beispielsweise können derartige modulartige Elemente als Reinigungselement für das Strangmaterial, als Bremselement mit insbesondere hohem Reibwiderstand, als Gleitelement mit insbesondere geringem Reibwiderstand, als Aufnahme- und oder Speicherelement für Werkzeuge, Werkstoffe und / oder Arbeitshilfsmittel, als Energiespeicher und / oder als insbesondere von außen manipulierbares Behältnis für beispielsweise Gleit- und / oder Reinigungsmittel ausgebildet sein. Demzufolge zeichnet sich die erfindungsgemäße Vorrichtung insbesondere durch ihre große Variabilität aus.

Nach einem weiteren Merkmal der Erfindung ist vorgesehen, daß der Handgriff aus einem im wesentlichen U-förmig ausgebildeten Flachelement, insbesondere aus Metall besteht, wobei die Speichereinrichtung an einem Schenkel des Flachelements drehbar befestigt ist und ein zweiter Schenkel einen Handansatz aufweist. Das Flachelement im Bereich des zweiten Schenkels ist im Querschnitt insbesondere U-förmig ausgebildet, wobei auf dem zweiten Schenkel vorzugsweise eine Ummantelung angeordnet ist, die zusammen mit dem im Querschnitt U-förmig ausgebildeten Schenkel eine im wesentlichen im Querschnitt rechtwinklige Aufnahme für das modulartige Element bildet. Diese Ausgestaltung hat den Vorteil, daß die Herstellung eines derartigen Handgriffs aus lediglich zwei Bestandteilen zu geringen Kosten möglich ist. Die Aufnahme für das modulartige Element wird hierbei durch den zweiten Schenkel des Flachelementes und einen Teil der Ummantelung gebildet, wobei die Ummantelung gleichzeitig die Aufgabe hat, die Handhabung der erfindungsgemäßen Vorrichtung ergonomisch positiv zu ermöglichen.

Vorzugsweise besteht die Ummantelung aus einem zähharten Kunststoff, der auch bei niedrigen Temperaturen angenehmer zu handhaben ist als beispielsweise ein Metallelement. Die Ummantelung kann profiliert ausgebildet sein, um einen besseren, da teilweise formschlüssigen Griff zu erzielen.

Es ist nach einem weiteren Merkmal der Erfindung vorgesehen, daß die Führung des strangförmigen Materials im Übergangsbereich des zweiten Schenkels zu einem den zweiten Schenkel mit dem ersten Schenkel verbindenden Steg angeordnet ist. Bei dieser Ausgestaltung ist ein zusätzliches Konstruktionselement für die Führung des strangförmigen Materials nicht notwendig. Vielmehr wird das strangförmige Material in einen Bereich des Handgriffs geführt, in den das modulartige Element einschiebbar ist, so daß das modulartige Element mit dem strangförmigen Material in Kontakt bringbar ist und gleichzeitig zusammen mit dem Schenkel und dem Steg eine allseitig geschlossene Führung bildet.

Vorzugsweise ist der Winkel zwischen dem zweiten Schenkel und dem Steg <90°, vorzugsweise zwischen 30° und 50° groß. Bei dieser Ausgestaltung kann das modulartige Element bis zur Anlage an den Schenkel geschoben werden, ohne daß die Gefahr besteht, die Führung für das strangförmige Material vollständig zu verschließen, so daß eine Bewegung des strangförmigen Materials durch die Führung nicht möglich ist.

Es wurde bereits eingangs zur Erläuterung der Erfindung dargestellt, daß das modulartige Element als Reinigungselement, als Bremselement, als Gleitelement oder dergleichen ausgebildet sein kann. Darüberhinaus wurde ausgeführt, daß das modulartige Element beispielsweise auch als Aufnahme- und Speicherelement für Werkzeuge, Werkstoffe und / oder Arbeitshilfsmittel dienen kann. Hierbei ist nicht ausgeschlossen, daß das modulartige Element sowohl als Aufnahme- und Speicherelement für Werkzeuge, Werkstoffe und / oder Arbeitshilfsmittel als auch als Bremselement, als Gleitelement oder als Reinigungselement ausgebildet ist. Demzufolge besteht nach einem weiteren Merkmal der Erfindung die Möglichkeit, das modulartige Element derart auszubilden, daß es zwei unterschiedliche Funktionen aufweist. Beispielsweise kann das modulartige Element an seinem einen Ende als Reinigungselement und an seinem zweiten Ende als Gleitelement ausgebildet sein. So besteht die Möglichkeit, das strangförmige Material beispielsweise zur Reinigung eines Rohrleitungssystems, insbesondere im Bereich von Flugzeugtoiletten in das Rohrleitungssystem einzuschieben, wobei in diesem Fall das Gleitelement gegen das strangförmige Material gedrückt wird, um ein erleichtertes Einschieben bei geringem Reibwiderstand zu ermöglichen. Soll nun das strangförmige Material nach der Reinigung aus dem Rohrleitungssystem herausgezogen werden, so ist oftmals festzustellen, daß das strangförmige Material verschmutzt ist. Durch ein Umstecken des modulartigen Elementes kann das als Reinigungselement ausgebildete Ende des modulartigen Elementes in Kontakt mit dem strangförmigen Material gebracht werden, so daß das strangförmige Material durch das Reinigungselement beim Herausziehen aus dem Rohrleitungssystem automatisch gereinigt wird. In gleicher Weise sind selbstverständlich auch andere Kombinationen modulartiger Elemente denkbar. Beispielsweise kann es erforderlich sein, das Einschieben des strangförmigen Materials durch ein Gleitelement zu erleichtern, wohingegen ein Herausziehen des strangförmigen Materials dadurch erfolgen soll, daß ein weiteres Abwickeln des strangförmigen Materials aus der Speichereinrichtung verhindert werden soll. In diesem Fall kann das zuvor verwendete Gleitelement durch ein Bremselement ersetzt werden, so daß durch einen hohen Reibwiderstand das strangförmige Material relativ zum Handgriff festsetzbar ist. Um das strangförmige Material anschließend vollständig oder abschnittsweise in die Speichereinrichtung einschieben zu können, kann entweder das Bremselement durch Herausziehen aus dem Handgriff gelockert oder durch ein Gleitelement ersetzt werden. Bremselement und Gleitelement können selbstverständlich wiederum gemeinsam ein modulartiges Element bilden, wobei die unterschiedlichen Materialien mit unterschiedlichen Reibwiderständen jeweils an einem Ende des modulartigen Elementes angeordnet sind.

Zur Vereinfachung der Handhabung des modulartigen Elementes ist vorgesehen, daß das modulartige Element einen Träger aufweist, auf dem zumindest ein Funktionselement, beispielsweise ein Reinigungselement und / oder ein Gleitelement angeordnet ist, wobei der Träger vorzugsweise entsprechend dem Verschleiß des Funktionselementes anpaßbar, insbesondere kürzbar ist. Der Träger dient der einfachen Herstellung des modulartigen Elementes, insbesondere wenn das modulartige Element zwei unterschiedliche Funktionselemente aufweist. Um dem Verschleiß beispielsweise eines Gleitelementes Rechnung zu tragen, ist es erforderlich, daß das Gleitelement zuverlässig am strangförmigen Material anliegt. Da erfahrungsgemäß die verwendbaren Trägerelemente nicht zwingend als Gleitelemente ausgebildet sind, muß der Träger bei zunehmendem Verschleiß des Gleitelementes aus dem auf das strangförmige Material wirkenden Ende des Gleitmaterials entfernbar sein. Dies erfolgt dadurch, daß der Träger an bestimmten Stellen Sollbruchstellen aufweist, die ein Kürzen des Trägers in Abhängigkeit des Verschleißes des Funktionselementes ermöglicht. Der Träger kann im Bereich der Sollbruchstellen abgeschnitten oder abgebrochen werden.

Das modulartige Element ist entsprechend dem Querschnitt der Aufnahme ausgebildet, so daß es reibschlüssig in der Aufnahme gehalten ist. Selbstverständlich besteht auch die Möglichkeit, das modulartige Element formschlüssig, beispielsweise durch in der Aufnahme angeordnete Vorsprünge, die in entsprechende Ausnehmungen im modulartigen Element eingreifen, zu halten.

Die Aufnahme ist vorzugsweise mit einer Abdeckung verschließbar, die insbesondere einen Kraftspeicher aufweist, mit dem das modulartige Element in Richtung auf das Strangmaterial im Bereich der Führung geschoben wird. Die Abdeckung erfüllt zum einen die Aufgabe, die Aufnahme zu verschließen, um ein unbeabsichtigtes Entfernen des modulartigen Elementes zu verhindern. Gleichzeitig wird durch die Abdeckung das Eindringen von Verschmutzungen in die Aufnahme verhindert. Ist die Abdeckung mit einem Kraftspeicher kombiniert, so dient die Abdeckung darüberhinaus dazu, den notwendigen Anpreßdruck des modulartigen Elementes auf das strangförmige Material bereitzustellen.

Es ist nach einem weiteren Merkmal der Erfindung vorgesehen, daß am Handgriff ein Längenmeßgerät oder ein mit einer am freien Ende des Strangmaterials angeordnete Kamera verbundenes Display angeordnet ist. Derart ausgebildet, eignet sich die erfindungsgemäße Vorrichtung insbesondere für die Untersuchung von Rohrleitungen und Kanalsystemen, wobei im Handgriff vorzugsweise die entsprechenden Energiequellen für beispielsweise die Kamera und / oder das Display angeordnet sind. Über das Längenmeßgerät kann bei dieser Ausgestaltung eine genaue Lokalisierung eventueller Verunreinigungen und / oder Beschädigungen im Rohrleitungssystem festgelegt werden.

Es ist ferner nach einem weiteren Merkmal der Erfindung vorgesehen,daß der Handgriff mit seinem ersten Schenkel des Flachelements an einem Teil eines Schleifrings befestigt ist und daß ein zweiter Teil des Schleifrings mit der Speichereinrichtung verbunden ist, wobei die beiden Teile des Schleifrings relativ zueinander drehbar sind und mehrere Schleifkontakte aufweisen, die in jeder Stellung der beiden Teile des Schleifrings miteinander in Kontakt stehen. Bei dieser Ausgestaltung können Energie und/oder daten über den Schleifring im Bereich des Handgriffs bereitgestellt werden, ohne hierdurch die Drehbarkeit der Speichereinrichtung zu beeinträchtigen

Weiterhin ist vorgesehen, daß der Schleifring eine Freilaufbremse, einen Bremsring und/oder einstellbare Bremskontakte aufweist, die vorzugsweise an dem mit der Speichereinrichtung verbunden Teil des Schleifrings angeordnet sind, um die Drehbarkeit der Speichereinrichtung bei Bedarf zu begrenzen oder zu unterbrechen.

Vorzugsweise sieht eine Weiterbildung der Erfindung vor, daß an dem Handgriff ein Display, insbesondere ein Monitor befestigbar ist, der über Energie- und/oder Datenleitungen mit einem Teil des Schleifrings (verbunden ist. Auf dem Display bzw. dem Monitor können der handhabenden Person Daten und Bilder bereitgestellt werden, die die Arbeit mit der erfindungsgemäßen Vorrichtung wesentlich vereinfachen. Beispielsweise kann das Display bzw. der Monitor mit einer am Ende des strangförmigen Materials angeordneten Kamera zur Inspektion von Rohrleitung verbunden sein. Die energie- bzw. datentechnische Verbindung zwischen der Kamera und dem Display bzw. dem Monitor erfolgt hier vorzugsweise über den Schleifring.

Eine konstruktiv einfache und daher kostengünstige Ausgestaltung der erfindugnsgemäßen Vorrichtung ist dadurch gegeben, daß die Speichereinrichtung Speichen aufweist, die ausgehend von einer Nabe radial verlaufend angeordnet sind.

Vorzugsweise sind die Speichen in die Nabe eingesteckt und insbesondere eingerastet, um einen einfachen Austausch der Speichen oder eine kostegünstige Herstellung der Speichereinrichtung zu ermöglichen.

Alternativ kann vorgesehen sein, daß die Speichereinrichtung ein zur Nabe hin zumindest teilweise geöffnetes Gehäuse zur Aufnahme des strangförmigen Materials aufweist.

Nach einer Weiterbildung der Erfindung ist vorgesehen, daß der Handgriff ein Gelenk aufweist, so daß er in eine Position verstellbar ist, in der der Handgriff im wesentlichen parallel zur Drehachse der Speichereinrichtung angeordnet ist.

Der Handgriff ist vorzugsweise über eine Hohlachse mit der Speichereinrichtung drehbar verbunden ist, durch welche Hohlachse Energie- und/oder Datenleitungen führbar sind.

Vorzugsweise weist die Hohlachse eine Hohlschraube und/oder einen Hohlflansch auf, die bzw. der als Schnellverschluß, insbesondere als Schnappverschluß ausgebildet ist bzw. sind. Hierdurch ist ein leichter Austausch der Speichereinrichtungen möglich. Bei einem derartigen Austausch der Speichereinrichtungen können beispielsweise vorkonfektionierte Speichereinrichtungen mit unterschiedlichem strangförmigem Material gegeneinander ausgetauscht werden.

Weitere Merkmale und Vorteile der erfindungsgemäßen Vorrichtung ergeben sich aus der nachfolgenden Beschreibung der dazugehörigen Zeichnung, in der eine bevorzugte Ausführungsform der Erfindung dargestellt ist. In der Zeichnung zeigen:
- Figur 1: einen Handgriff für eine Vorrichtung zum Aufnehmen und Abziehen eines biegeelastischen strangförmigen Materials in teilweise durchbrochener Ansicht;
- Figur 2: den Handgriff gemäß Figur 1 in teilweise gebrochener Seiten-Ansicht;
- Figur 3: den Handgriff gemäß den Figuren 1 und 2 in einer Stirnansicht;
- Figur 4: ein modulartiges Element zum Einsatz im Handgriff gemäß den Figuren 1 bis 3 in einer Draufsicht;
- Figur 5: das modulartige Element gemäß Figur 4 in einer Seitenansicht;
- Figur 6: eine Vorrichtung zum Aufnehmen und Abziehen eines biegeelastischen strangförmigen Materials mit dem Handgriff gem. den Figuren 1 bis 3 in teilweise geschnittener Seitenansicht,
- Figur 7: den Handgriff gem. den Figuren 1 bis 3 mit einem Schleifring und einem Monitor in Seitenansicht und
- Figur 8: den Handgriff gem. Figur 7 mit einer Vorrichtung zum Aufnehmen und Abziehen eines biegeelastischen strangförmigen Materials in einer Teilansicht.

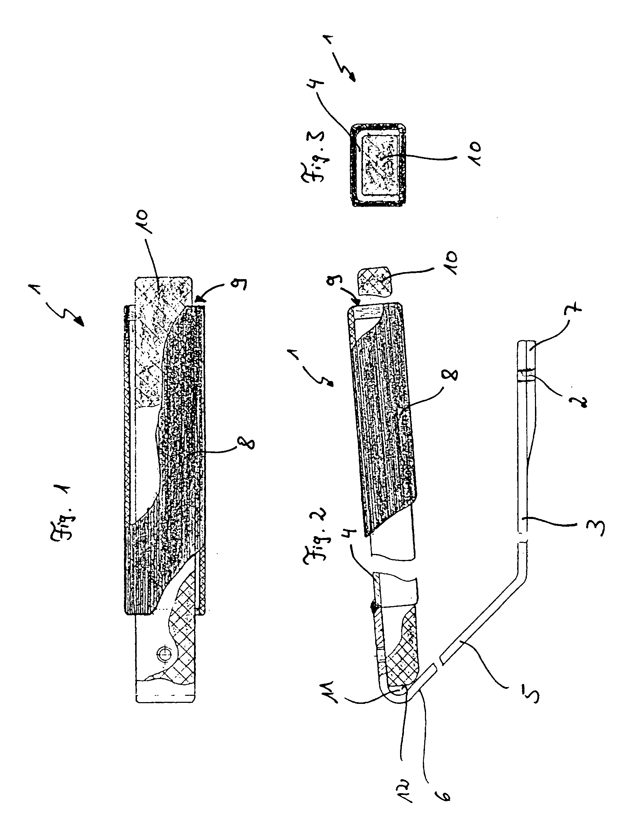

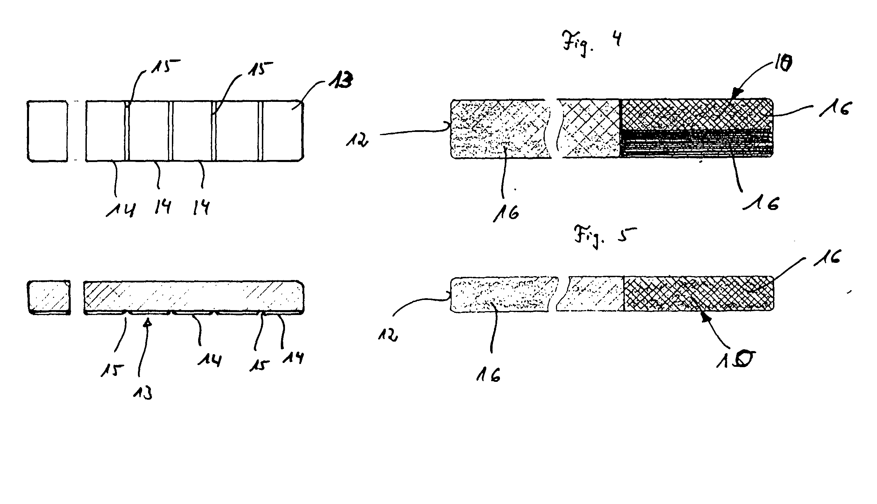

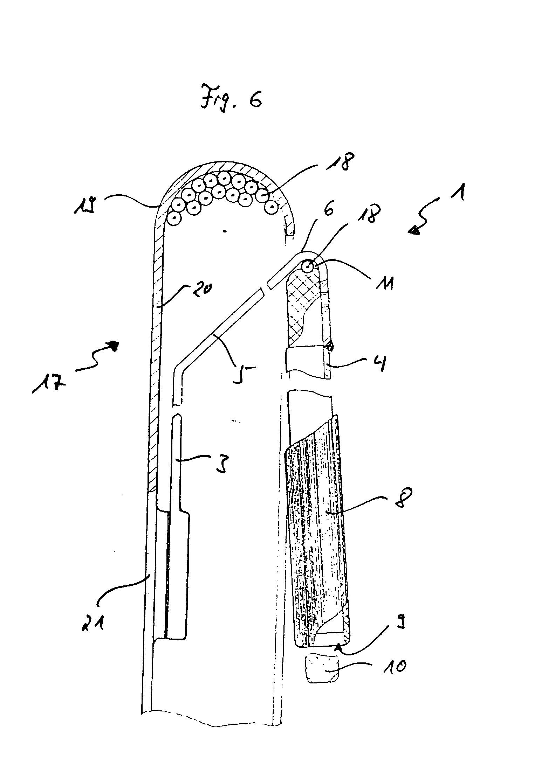

Der in den Figuren 1 bis 3 dargestellte Handgriff 1 ist dazu vorgesehen, an einer nicht näher dargestellten Speichereinrichtung für die Aufnahme eines biegeelastischen strangförmigen Materials angeordnet zu werden, wobei die Speichereinrichtung derart an dem Handgriff 1 befestigbar ist, daß die Speichereinrichtung um eine ebenfalls nicht näher dargestellte Achse drehbar gelagert ist, welche Achse eine Bohrung 2 im Handgriff 1 durchgreift.

Der Handgriff 1 ist im wesentlichen U-förmig ausgebildet, so daß er einen ersten Schenkel 3, einen zweiten Schenkel 4 sowie einen die beiden Schenkel 3 und 4 verbindenden Steg 5 aufweist. Im Bereich des ersten Schenkels 3, des Stegs 5 und des ersten sich an den Steg 5 anschließenden Bereich des zweiten Schenkels 4 ist der Handgriff 1 als Flachelement 6 aus Stahl hergestellt.

Demgegenüber weist das freie Ende des zweiten Schenkels 4 im Querschnitt eine U-förmige Ausgestaltung auf.

Die Bohrung 2 zur Befestigung des Handgriffs 1 an der nicht näher dargestellten Speichereinrichtung ist im Bereich des freien Endes des ersten Schenkels 3 angeordnet, wobei der erste Schenkel 3 im Bereich dieses freien Endes eine Verkröpfung 7 aufweist.

Auf das freie Ende des zweiten Schenkels 4, welches im Querschnitt U-förmig ausgebildet ist, ist eine Ummantelung 8 aus einem zähharten Kunststoff aufgeschoben. Die Ummantelung 8 bildet zusammen mit dem zweiten Schenkel 4 einen Handansatz zur Handhabung der voranstehend genannten Vorrichtung zum Aufnehmen und Abziehen eines biegeelastischen strangförmigen Materials, beispielsweise zum Einziehen von Kabeln oder sonstigen elektrischen oder anderen Energie- und / oder Datenleitungen in Kabelschutzrohre oder Leerrohre, oder von Einrichtungen zum Reinigen und/oder Prüfen von Rohrleitungen und / oder Kanälen, wobei die Eigenspannung des strangförmigen Materials das Bestreben hat, das strangförmige Material gestreckt zu halten.

Die Ummantelung 8 bildet zusammen mit dem im Querschnitt U-förmig ausgebildeten Ende des zweiten Schenkels 4 eine Aufnahme 9, in die ein modulartiges Element 10 einschiebbar ist.

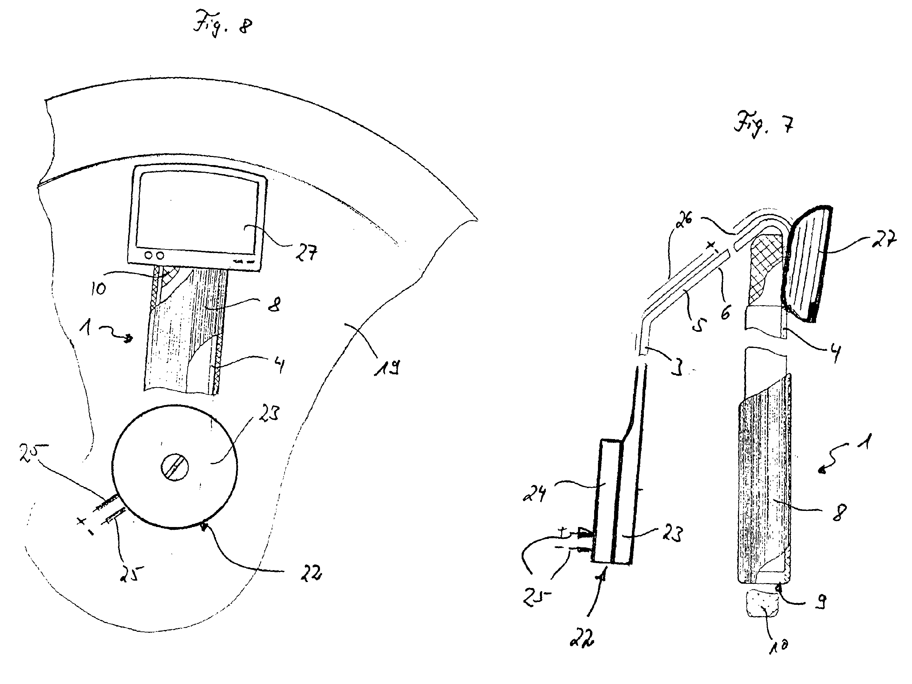

Die Außenkontur des modulartigen Elementes 10, welches in den Figuren 4 und 5 dargestellt ist, entspricht der Kontur der Aufnahme 9, so daß das modulartige Element 10 reibschlüssig in der Aufnahme 9 gehalten ist.

Das modulartige Element 10 bildet in seinem in die Aufnahme 9 eingeschobenen Zustand zusammen mit dem Übergangsbereich zwischen dem zweiten Schenkel 4 und dem Steg 5 eine Führung 11 für das strangförmige Material. Die Führung 11 ist einerseits durch eine kreisbogenabschnittförmige Biegung des Handgriffs 1 im Bereich des Übergangs zwischen dem zweiten Schenkel 4 und dem Steg 5 ausgebildet, wobei der Winkel zwischen dem zweiten Schenkel 4 und dem Steg 5 45° groß ist. Andererseits wird die Führung 11 durch eine flache Stirnfläche 12 des modulartigen Elementes 10 gebildet, das bis zur Anlage an das Flachelement 6 im Bereich des Stegs 4 schiebbar ist.

Das modulartige Element 10 kann als Reinigungselement, beispielsweise als Schwamm, als Borstenpinsel und / oder als Kunststoff- oder Drahtbürste ausgebildet sein. Darüberhinaus besteht die Möglichkeit, das modulartige Element als Bremselement, d. h. aus einem Material mit hohem Reibwiderstand oder als Gleitelement, d. h. aus einem Material mit geringem Reibwiderstand auszubilden, wobei als Gleitelement beispielsweise ein Seifenelement vorgesehen sein kann.

Alternativ hierzu kann das modulartige Element 10 ein Behältnis für beispielsweise Gleit- und / oder Reinigungsmittel aufweisen, welches von außen manipulierbar ist, um das Gleit- und / oder Reinigungsmittel in den Bereich der Führung 11 zu fördern. Neben diesen Ausgestaltungsmöglichkeiten sind selbstverständlich weitere Ausgestaltungen denkbar, beispielsweise die Ausbildung des modulartigen Elementes 10 als Aufnahme für eine Batterie oder einen Akkumulator, als Aufnahme- und / oder Speicherelement für Werkzeuge, Werkstoffe und / oder Arbeitshilfsmittel, wobei selbstverständlich das modulartige Element 10 auch als Kombinationen der voranstehend genannten Ausgestaltungen vorgesehen sein kann.

Gemäß Figur 4 ist zu erkennen, daß das modulartige Element 10 einen Trägerstreifen 13 aufweist, auf dem das modulartige Element mit einer speziellen Eigenschaft angeordnet ist. Der Trägerstreifen 13 ist in mehrere Abschnitte 14 unterteilt, die durch Nuten 15 voneinander getrennt sind, so daß der Trägerstreifen 13 entlang der Nuten 15, die eine Sollbruchstelle darstellen, in einzelne Teile gebrochen werden kann. Dieser Vorgang ist beispielsweise dann erforderlich, wenn das modulartige Element 10 bereichsweise verbraucht ist, so daß seine gewünschte Wirkung nicht mehr oder zumindest nicht mehr vollständig erzielt werden kann.

Weiterhin ist aus den Figuren 4 und 5 zu erkennen, daß das modulartige Element 10 in unterschiedliche Bereiche 16 unterteilbar ist, wobei die unterschiedlichen Bereiche 16 unterschiedliche Eigenschaften aufweisen.

Die Figur 6 zeigt die Anordnung des Handgriffs 1 an einer Vorrichtung 17 zum Aufnehmen und Abziehen eines biegeelastischen strangförmigen Materials 18. Die Vorrichtung 17 besteht aus einer Speichereinrichtung 19 mit Speichen 20, die ausgehend von einer Nabe 21 radial verlaufend angeordnet und an ihrem freien Ende U-förmig gebogen sind, so daß sie einen Käfig für das strangförmige Material 18 bilden. An der Nabe 21 ist der erste Schenkel das strangförmige Material 18 bilden. An der Nabe 21 ist der erste Schenkel 3 des Handgriffs 1 drehbar befestigt, so daß sich die Speichereinrichtung 19 relativ zum Handgriff 1 drehen kann.

Bei der Ausführungsform gemäß den Figuren 7 und 8 ist die Nabe 21 als Schleifring 22 ausgebildet, wobei der Schleifring 22 aus einem ersten, mit dem ersten Schenkel 3 des Flachelements 6 verbundenen Teil 23 und einem zweiten Teil 24 besteht, der mit der Speichereinrichtung 19 drehfest verbunden ist. Die beiden Teile 23 und 24 des Schleifrings 22 sind relativ zueinander drehbar und weisen mehrere Schleifkontakte auf, die in jeder Stellung der beiden Teile 23 und 24 des Schleifrings 22 miteinander in Kontakt stehen. Beispielsweise können die Schleifkontakte im Bereich eines Teils 23 oder 24 ringförmig und im korrespondieren Teil 24 oder 23 punktförmig ausgebildet sein, wobei entweder die ringförmigen oder die punktförmigen Schleifkontakte über Leitungen 25 mit einer Energie- oder Datenquelle verbunden sind, wohingegen weitere Leitungen 26 den Schleifring 22 mit einem im Bereich des Handgriffs 1 angeordneten Monitor 27 verbinden.

Bei der erfindungsgemäßen Vorrichtung können insbesondere modulare Bauelemente, wie Ortungs- und Kamera-Inspektionssysteme in besonders kompakter Bauweise integriert werden. Die modulartigen Bauelemente können aber auch als Batterie-, Signal-, Beleuchtungs-, Magnet- und/oder Sensoreinrichtungen ausgebildet sein. Ferner sind derartige modulartigen Bauelemente als Infrarot-, Funk- oder ähnliche Sender und Empfängereinheiten denkbar.

## Patentansprüche

1. Vorrichtung zum Aufnehmen und Abziehen eines biegeelastischen strangförmigen Materials zum beispielsweise zum Einziehen von Kabeln oder sonstigen elektrischen oder anderen Energie- und/oder Datenleitungen in Kabelschutzrohre oder Leerrohre, oder von Einrichtungen zum Reinigen und/oder Prüfen von Rohrleitungen und/oder Kanälen, wobei die Eigenspannung des Materials das Bestreben hat, das Material gestreckt zu halten, mit einer Speichereinrichtung, an deren Innenmantel sich das biegeelastische Material anlegt, einem Auslaß für das biegeelastische Material und einem Handgriff, der derart mit der Speichereinrichtung verbunden ist, daß die Speichereinrichtung relativ zum Handgriff drehbar ist,
**dadurch gekennzeichnet,**
**daß** der Handgriff (1) eine Führung (11) für das Strangmaterial (18) aufweist und daß der Handgriff (1) eine Aufnahme (9) für ein modulartiges Element (10) hat, welches mit dem auslaufenden oder einlaufenden Strangmaterial (18) in Kontakt bringbar ist.

2. Vorrichtung nach Anspruch 1,
**dadurch gekennzeichnet,**
**daß** der Handgriff (1) aus einem im wesentlichen U-förmig ausgebildeten Flachelement (6), insbesondere aus Metall besteht, wobei die Speichereinrichtung (19) an einem Schenkel (3) des Flachelements (6) drehbar befestigt ist und ein zweiter Schenkel (4) einen Handansatz aufweist.

3. Vorrichtung nach Anspruch 2,
**dadurch gekennzeichnet,**
**daß** das Flachelement (6) im Bereich des zweiten Schenkels (4) im Querschnitt U-förmig ausgebildet ist und eine auf dem zweiten Schenkel (4) angeordnete Ummantelung (8) aufweist, die die Aufnahme (9) für das modulartige Element (10) bildet.

4. Vorrichtung nach Anspruch 3,
**dadurch gekennzeichnet,**
**daß** die Ummantelung (8) aus einem zähharten Kunststoff besteht.

5. Vorrichtung nach Anspruch 1,
**dadurch gekennzeichnet,**
**daß** die Führung (11) des strangförmigen Materials (18) im Übergangsbereich des zweiten Schenkels (4) zu einem den zweiten Schenkel (4) mit dem ersten Schenkel (3) verbindenden Steg (5) angeordnet ist.

6. Vorrichtung nach Anspruch 5,
**dadurch gekennzeichnet,**
**daß** der Winkel zwischen dem zweiten Schenkel (4) und dem Steg (5) <90°, vorzugsweise zwischen 30° und 50° groß ist.

7. Vorrichtung nach Anspruch 1,
**dadurch gekennzeichnet,**
**daß** das modulartige Element (10) als Reinigungselement ausgebildet ist.

8. Vorrichtung nach Anspruch 1,
**dadurch gekennzeichnet,**
**daß** das modulartige Element (10) als Bremselement mit insbesondere hohem Reibwiderstand ausgebildet ist.

9. Vorrichtung nach Anspruch 1,
**dadurch gekennzeichnet,**
**daß** das modulartige Element (10) als Gleitelement mit insbesondere geringem Reibwiderstand ausgebildet ist.

10. Vorrichtung nach Anspruch 1,
**dadurch gekennzeichnet,**
**daß** das modulartige Element (10) zwei unterschiedliche Funktionen aufweist, beispielsweise an seinem einem Ende als Reinigungselement und an seinem zweiten Ende als Gleitelement ausgebildet ist.

11. Vorrichtung nach Anspruch 1,
**dadurch gekennzeichnet,**
**daß** das modulartige Element (10) einen Träger (13) aufweist, auf dem zumindest ein Funktionselement, beispielsweise ein Reinigungselement und/oder ein Gleitelement angeordnet ist, wobei der Träger (13) vorzugsweise entsprechend dem Verschleiß des Funktionselementes anpaßbar, insbesondere kürzbar ist.

12. Vorrichtung nach Anspruch 1,
**dadurch gekennzeichnet,**
**daß** das modulartige Element (10) zumindest ein Behältnis für beispielsweise Gleit- und / oder Reinigungsmittel aufweist.

13. Vorrichtung nach Anspruch 1,
**dadurch gekennzeichnet,**
**daß** das Behältnis von außen manipulierbar ist.

14. Vorrichtung nach Anspruch 1,
**dadurch gekennzeichnet,**
**daß** das modulartige Element (10) eine Aufnahme für eine Batterie oder einen Akkumulator aufweist, welche Energie für beispielsweise ein Display oder eine elektronische Längenmeßeinrichtung bereitstellen.

15. Vorrichtung nach Anspruch 1,
**dadurch gekennzeichnet,**
**daß** das modulartige Element (10) entsprechend dem Querschnitt der Aufnahme (3) ausgebildet ist.

16. Vorrichtung nach Anspruch 1,
**dadurch gekennzeichnet,**
**daß** die Aufnahme (9) mit einer Abdeckung verschließbar ist, die insbesondere einen Kraftspeicher aufweist, mit dem das modulartige Element (10) in Richtung auf das Strangmaterial (18) im Bereich der Führung (11) geschoben wird.

17. Vorrichtung nach Anspruch 1,
**dadurch gekennzeichnet,**
**daß** das modulartige Element (10) als Aufnahme- und Speicherelement für Werkzeuge, Werkstoffe und / oder Arbeitshilfsmittel ausgebildet ist.

18. Vorrichtung nach Anspruch 1,
**dadurch gekennzeichnet,**
**daß** am Handgriff (1) ein Längenmeßgerät oder ein mit einer am freien Ende des Strangmaterials angeordnete Kamera verbundenes Display angeordnet ist.

19. Vorrichtung nach Anspruch 1,
**dadurch gekennzeichnet,**
**daß** der Handgriff (1) mit seinem ersten Schenkel (3) des Flachelements (6) an einem Teil (23) eines Schleifrings (22) befestigt ist und daß ein zweiter Teil (24) des Schleifrings (22) mit der Speichereinrichtung verbunden ist, wobei die beiden Teile (23, 24) des Schleifrings (22) relativ zueinander drehbar sind und mehrere Schleifkontakte aufweisen, die in jeder Stellung der beiden Teile (23, 24) des Schleifrings (22) miteinander in Kontakt stehen.

20. Vorrichtung nach Anspruch 19,
**dadurch gekennzeichnet,**
**daß** der Schleifring (22) eine Freilaufbremse, einen Bremsring und/oder einstellbare Bremskontakte aufweist, die vorzugsweise an dem mit der Speichereinrichtung (19) verbunden Teil (24) des Schleifrings (22) angeordnet sind.

21. Vorrichtung nach Anspruch 19,
**dadurch gekennzeichnet,**
**daß** an dem Handgriff (1) ein Display, insbesondere ein Monitor (27) befestigbar ist, der über Energie- und/oder Datenleitungen (25, 26) mit einem Teil des Schleifrings (22) verbunden ist.

22. Vorrichtung nach Anspruch 1,
**dadurch gekennzeichnet,**
**daß** die Speichereinrichtung (19) Speichen (20) aufweist, die ausgehend von einer Nabe (21) radial verlaufend angeordnet sind.

23. Vorrichtung nach Anspruch 21,
**dadurch gekennzeichnet,**
**daß** die Speichen (20) in die Nabe (21) eingesteckt und insbesondere eingerastet sind.

24. Vorrichtung nach Anspruch 1,
**dadurch gekennzeichnet,**
**daß** die Speichereinrichtung (19) ein zur Nabe (21) hin zumindest teilweise geöffnetes Gehäuse zur Aufnahme des strangförmigen Materials aufweist.

25. Vorrichtung nach Anspruch 1,
**dadurch gekennzeichnet,**
**daß** der Handgriff (1) ein Gelenk aufweist, so daß er in eine Position verstellbar ist, in der der Handgriff (1) im wesentlichen parallel zur Drehachse der Speichereinrichtung (19) angeordnet ist.

26. Vorrichtung nach Anspruch 1,
**dadurch gekennzeichnet,**
**daß** der Handgriff (1) über eine Hohlachse mit der Speichereinrichtung (19) drehbar verbunden ist, durch welche Hohlachse Energie- und/oder Datenleitungen führbar sind.

27. Vorrichtung nach Anspruch 26,
**dadurch gekennzeichnet,**
**daß** die Hohlachse eine Hohlschraube und/oder einen Hohlflansch aufweist, die bzw. der als Schnellverschluß, insbesondere als Schnappverschluß ausgebildet ist bzw. sind.
